# DEMANDE DE BREVET EUROPEEN

(11) **EP 2 295 314 A1**
(43) Date de publication de la demande: **16.03.2011**
(21) Numéro de dépôt: 10169641.7
(22) Date de dépôt: 15.07.2010
(51) Int. Cl.: B62D 65/06

(54) **Procédé de pose et de fixation d'une pièce sur un support et dispositif pour la mise en oeuvre du procédé**

(30) Priorité: 09.09.2009 FR 0956128
(71) Demandeur: Peugeot Citroën Automobiles SA, 78140 Vélizy-Villacoublay (FR)
(72) Inventeur: Diotalevi, Louis, 25200, GRAND CHARMONT (FR); Plunian, Michel, 70400, TAVEY (FR)
(74) Mandataire: Allain, Laurent

(57) **Abrégé**

La présente invention concerne un procédé de fixation d'une pièce (C1) sur un support (C2) par des vis difficilement accessibles, qui comprend au moins les étapes de:
placer un bâti (G) pourvu d'au moins un mécanisme de vissage avec déport (D1) et conformé pour pouvoir servir comme gabarit pour la pièce (C1), sur le support (C2),
positionner la pièce (C1) sur le bâti (G) en une position de référence à laquelle les vis de fixation (V1, V2) sont difficilement accessibles et la partie déportée du mécanisme de vissage est à l'extérieur de la pièce,
commander à partir de sa partie déportée le mécanisme de vissage (D) pourvu d'au moins une vis de fixation (V1) de façon à visser la vis de fixation pour qu'elle assure au moins un pré-maintien de la pièce au support

L'invention concerne également un dispositif pour la mise en oeuvre du procédé.

## Description

La présente invention concerne un procédé de pose d'une pièce sur un support et de fixation de cette pièce par des moyens de fixation difficilement accessibles ainsi qu'un dispositif pour la pose et la fixation d'une telle pièce.

La présente invention concerne plus particulièrement la possibilité de conformer et de fixer manuellement une pièce telle qu'un capot d'un véhicule, en position fermée dans le cas où les charnières du capot sont inaccessibles directement à la visseuse ou sont difficilement accessibles, notamment de façon ergonomique, pour un opérateur.

Lorsqu'il s'agit, par exemple, de monter un capot sur la caisse d'un véhicule automobile, cela peut être fait soit avec le capot en position entièrement ouverte, en position semi-ouverte ou en position fermée. Dans les deux premiers cas, les fixations des charnières sur la caisse et sur le capot sont facilement accessibles et la pose et le montage ne nécessitent pas de mesures particulières.

Contrairement à cela, dans le troisième cas, les moyens de fixation ne sont pas accessibles de l'extérieur et le montage du capot doit être effectué avec des visseuses posées ou bridées sous le capot. Si elles sont posées, un déport de commande des visseuses doit être organisé et le positionnement de chaque visseuse et des vis doit être garanti par rapport au capot. Si elles sont bridées, cela alourdit le poids et le coût de l'outillage, notamment par la nécessité de placer plus d'une visseuse par côté.

Le but de l'invention est de pallier les inconvénients décrits ci-avant.

Le but de l'invention est atteint pour un procédé de fixation d'une pièce sur un support par des vis difficilement accessibles, par le fait qu'il comprend au moins les étapes suivantes :
- placer un bâti pourvu d'au moins un mécanisme de vissage avec déport et conformé pour pouvoir servir comme gabarit pour la pièce, sur le support,
- positionner la pièce sur le bâti en une position de référence à laquelle les vis de fixation sont difficilement accessibles et la partie déportée du mécanisme de vissage est à l'extérieur de la pièce,
- commander à partir de sa partie déportée le mécanisme de vissage pourvu d'au moins une vis de fixation de façon à visser la vis de fixation pour qu'elle assure au moins un pré-maintien de la pièce au support.

Des caractéristiques supplémentaires du procédé peuvent être :
- la pièce est déplaçable de sa position de référence à une position relative au support à laquelle chaque vis est directement accessible et peut être serrée par une visseuse à un couple de serrage prédéterminé pour fixer définitivement la pièce au support ;
- le procédé consiste à utiliser d'autres vis de fixation pouvant être vissées par la visseuse à un couple de serrage prédéterminé pour fixer la pièce au support ;
- le procédé consiste à fixer la pièce au support par l'intermédiaire d'au moins un élément d'articulation, tel qu'une charnière, solidaire de la pièce, et chaque vis de fixation permettant de fixer l'élément d'articulation au support ;
- la pièce est un capot et le support la caisse d'un véhicule, notamment automobile.

Le but de l'invention est également atteint avec un dispositif pour fixer une pièce sur un support par des vis difficilement accessibles, le dispositif comprenant un bâti conformé pour pouvoir servir comme gabarit pour positionner la pièce par rapport au support et pourvu d'au moins un mécanisme de vissage avec déport.

Le dispositif de l'invention peut avoir aussi au moins une des caractéristiques supplémentaires suivantes considérées isolément ou selon toute combinaison techniquement possible :
- le bâti comprend des premiers moyens de positionnement permettant de positionner le bâti par rapport au support et des seconds moyens de positionnement permettant de positionner la pièce par rapport au bâti ainsi que deux mécanismes de vissage à partie déportée pour fixer des éléments de fixation droits et gauches de type charnière sur la pièce ;
- les premiers moyens de positionnement comprennent des premiers éléments proéminents conformés pour pouvoir coopérer avec des trous pilote formés dans une partie du support, les seconds moyens de positionnement comprennent des seconds éléments proéminents conformés pour pouvoir coopérer avec des trous pilotes formés sur la pièce et les premiers et les seconds moyens de positionnement comprennent des appuis permettant de positionner en élévation le bâti par rapport au support et la pièce par rapport au bâti ;
- le ou chacun des mécanismes de vissage à partie déportée comporte un mécanisme de bascule permettant au cours d'un vissage d'exercer à distance un effort axial sur les vis lors du vissage,
- le ou chacun des mécanismes de vissage à partie déportée comporte un embout dont une extrémité comporte une tête identique à la tête de chaque vis utilisée pour la fixation de la pièce, pour être accouplée à une visseuse ;
- le ou chacun des mécanismes de vissage à partie déportée comporte un axe flexible reliant une tête de vissage avec renvoi d'angle de type « crowfoot » à un moyen d'entraînement de type boîte à renvoi d'angle destiné à recevoir une visseuse ;
- la pièce est un capot et le support est le charnon mobile de la charnière, le charnon fixe de la charnière étant déjà fixé à la caisse d'un véhicule, notamment automobile.

L'originalité de la présente invention réside dans l'utilisation d'un bâti remplissant deux fonctions différentes et sa combinaison avec des moyens de vissage classiques à déport. La fonction première est celle de conformer la pièce sur le support et la seconde fonction est celle de permettre un vissage à distance avec des vis destinées à la fixation de la pièce sur le support dans une position correcte dès le début du vissage et pendant le vissage entier.

D'autres caractéristiques et avantages de la présente invention ressortiront de la description ci-après d'un mode de réalisation de l'invention. La description est faite en référence aux dessins dont
la figure 1 représente un dispositif selon l'invention dans un exemple d'application dans le domaine de la construction automobile ;
la figure 2 représente le dispositif de la figure 1 mis en place pour le montage d'un capot sur la carrosserie d'un véhicule ;
la figure 3 représente un mode de réalisation du dispositif de l'invention en une première vue ; et
la figure 4 représente le dispositif de la figure 3 en une seconde vue opposée à la première.

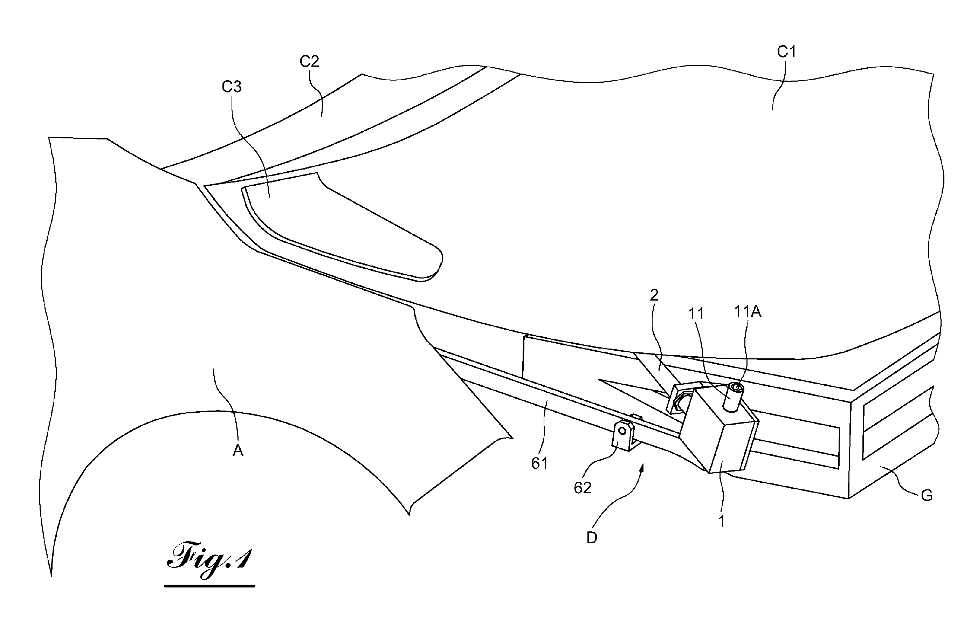

La figure 1 représente, à titre d'exemple non limitatif, un dispositif de l'invention appliqué pour le montage d'un capot C1, par exemple un capot moteur, sur la caisse C2 d'un véhicule automobile. Afin d'assurer un montage en position exacte du capot C1 par rapport à la caisse C2, le capot doit être monté en position fermée. En conséquence, des charnières et des vis avec lesquelles les charnières sont fixées respectivement sur le capot et sur la caisse sont difficilement accessibles.

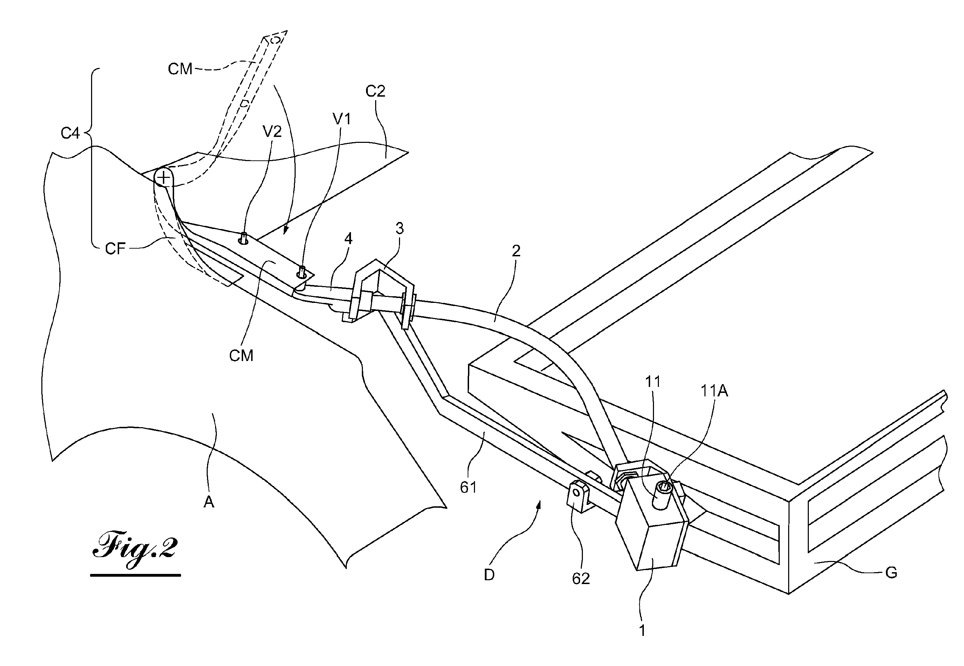

Sur la figure 1, une partie d'une aile droite A représente la carrosserie du véhicule et le capot C1 est en fait représenté par sa doublure de capot munie d'un élément de montage droit C3 sur lequel est montée un charnon mobile CM d'une charnière droite C4 (voir figure 2) du capot C1 et d'un élément de montage correspondant gauche pour une charnière gauche.

Afin de pouvoir accéder aux vis par lesquelles les charnières, et ainsi le capot C1, sont fixées sur la caisse C2, un mécanisme de vissage D avec une partie déportée est placé de chaque côté de la caisse C2 entre le capot C1 et la caisse C2 de façon à être accessible de l'extérieur pour y mettre en place une visseuse. Les deux mécanismes de vissage D sont montés sur un bâti G également placé entre le capot C1 et la caisse C2.

Grâce à cette disposition de l'invention et comme décrit plus loin plus en détails, deux opérateurs effectuant le montage du capot C1 sur la caisse C2 peuvent fixer le capot en appliquant leurs visseuses sur les mécanismes de vissage D au lieu de devoir accéder directement aux vis.

La figure 2 représente le mécanisme de vissage D solidaire du bâti G mis en place pour le montage d'un capot C1 sur la caisse C2 d'un véhicule automobile, avant la pose du capot. Sur la caisse C2 est fixé un charnon fixe CF de la charnière droite C4, c'est-à-dire la partie fixe de la charnière droite. Un charnon mobile CM de la charnière C4 constitue un des supports sur lesquels sera posé le capot C1 pour être monté sur la caisse C2. Des dispositions correspondantes (non représentées) sont présentes du côté gauche de la caisse.

Le charnon mobile CM est d'ailleurs représenté deux fois, à savoir en position verticale (en traits interrompus) pour la mise en place du bâti G et pour permettre l'engagement de celui-ci sur la caisse C2, et en position horizontale (en traits pleins) après l'introduction d'au moins une vis et après avoir été refermé.

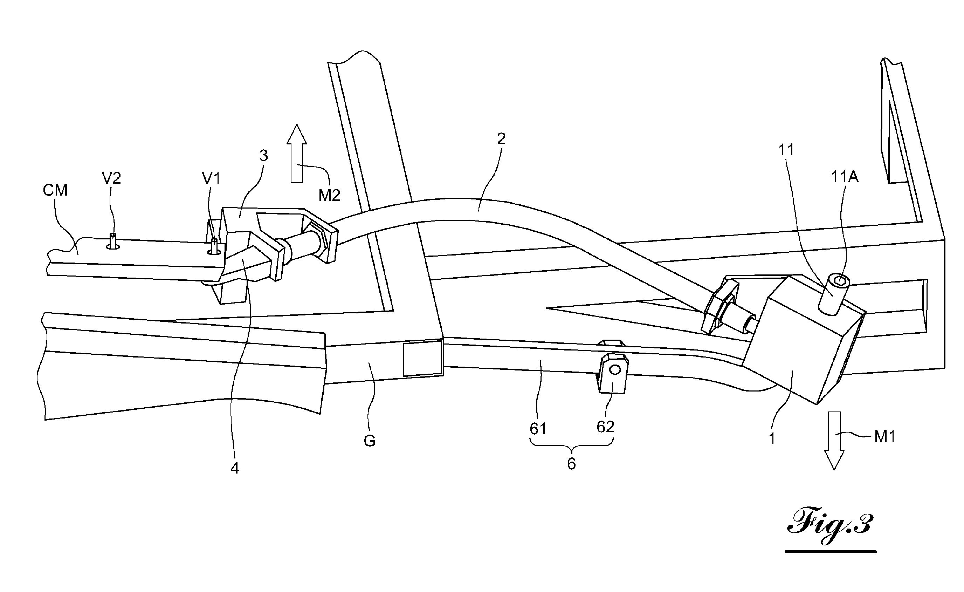

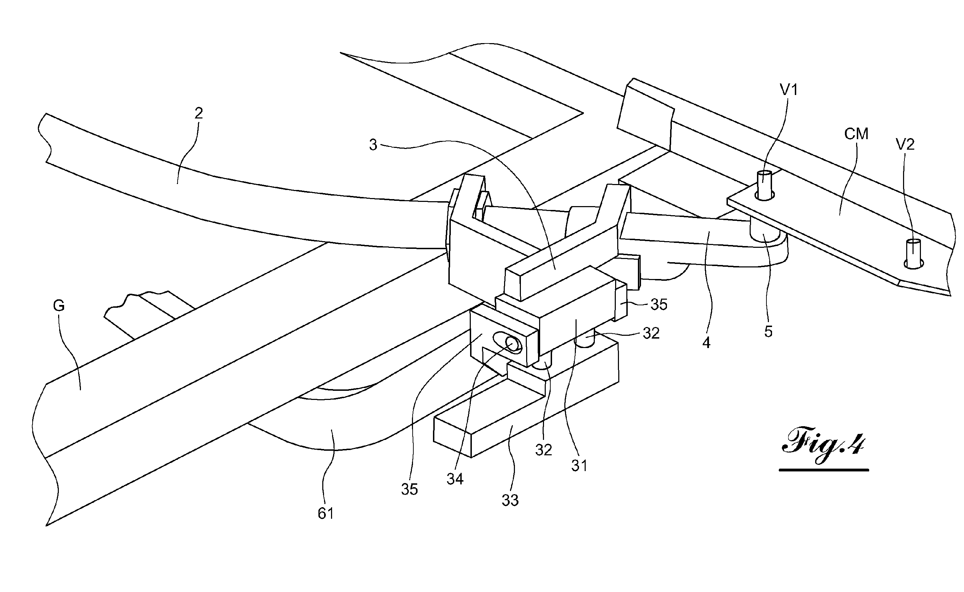

On remarque plus particulièrement que le mécanisme de vissage D, décrit en détails en référence aux figures 3 et 4, est donc placé en-dessous du charnon mobile CM afin de pouvoir introduire et visser au moins une des deux vis V1, V2 tête en bas dans le support C3 situé au-dessus de la charnière C4 lorsque le capot est posé sur le bâti G.

La figure 3 représente schématiquement les différents éléments du dispositif de fixation selon l'invention, le dispositif comprenant le bâti G et les deux mécanismes de vissage D disposés symétriquement pour pouvoir fixer simultanément un capot des deux côtés de la caisse C2 d'un véhicule automobile.

Le bâti G est formé selon la géométrie de l'ouverture du compartiment moteur qui doit être obturée par le capot C1. Le bâti G est plus particulièrement formé de façon à pouvoir être posé sur la caisse C2 dans une position de référence. A cette fin, le bâti G comprend des premiers éléments proéminents destinés à s'engager dans des trous pilote situés sur les ailes avant droite A et gauche du véhicule. Les premiers éléments proéminents et les trous pilote font partie de premiers moyens de positionnement permettant de positionner le bâti en position XY c'est-à-dire dans le sens longitudinal et dans le sens transversal par rapport à la caisse C2. Le positionnement du bâti G en Z, c'est-à-dire en élévation, par rapport à la caisse C2 est obtenu par appui sur des appuis « naturels » à l'avant et à l'arrière du compartiment moteur.

Le bâti G est également pourvu de seconds moyens proéminents destinés à coopérer avec des trous pilotes formés sur la doublure du capot C1 pour le positionnement en XY du capot par rapport au bâti G et ainsi par rapport à la caisse C2. De plus, le bâti G comprend des appuis assurant le positionnement du capot C1 en Z, c'est-à-dire en élévation par rapport au bâti G. Les seconds éléments proéminents et les trous pilote formés dans la doublure du capot forment avec les appuis du bâti G les seconds moyens de positionnement du dispositif de l'invention.

Chacun des mécanismes de vissage D comprend un moyen d'entraînement 1 sous la forme d'un boîtier de renvoi d'angle avec un embout 11 dont l'extrémité 11A est conformée à l'identique à la tête de chacune des vis V1, V2 utilisées pour la fixation du capot C1. L'extrémité 11A est destinée à être engagée dans la tête de vissage d'une visseuse électrique ou pneumatique. Chaque mécanisme de vissage D comprend en outre un axe d'entraînement flexible 2, un support 3 et une tête de vissage 4 sous la forme d'un boîtier de renvoi d'angle de type « crowfoot » maintenu par le support 3. La tête de vissage 4 est équipée d'une douille de vissage 5 déterminée selon les vis utilisées pour la fixation du capot C1. Le boîtier de renvoi d'angle de type « crowfoot » a l'avantage d'être peu encombrant en hauteur. Cependant, il est également concevable, si le volume de construction le permet, de remplacer le boîtier de renvoi d'angle de type « crowfoot » par un boîtier de renvoi d'angle classique.

L'axe d'entraînement flexible 2 relie en rotation le moyen d'entraînement 1 et la tête de vissage 4. Le moyen d'entraînement 1 et le support 3 sont montés ensemble sur un mécanisme de bascule 6 comportant un bras de bascule 61 et un pivot 62 solidaire du bâti G. Le mécanisme de bascule 6 permet de transmettre à la tête de vissage 4 un mouvement M1 de haut en bas effectué par l'opérateur et qui devient ainsi un mouvement M2 de bas en haut accompagnant l'engagement de la vis et la course de vissage, comme les deux flèches M1, M2 l'indiquent.

La figure 4 représente le dispositif de vissage D avec une vue sur le support et le guidage de la tête de vissage 4.

Afin de pouvoir assurer à la tête de vissage 4 un mouvement M2 linéaire malgré le mouvement M1 légèrement arqué résultant du mouvement de basculement du moyen d'entraînement 1 autour du pivot 61, le support 3 de la tête de vissage 4 est monté sur une glissière verticale formée par un bloc supérieur 31 pourvu de deux tiges verticales 32 logées mobiles dans des évidements cylindriques verticaux correspondants d'un bloc inférieur 33.

Le bloc supérieur 31 est relié au bras 61 du mécanisme de bascule 6 par deux tiges horizontales 34 logées mobiles dans des évidements oblongs horizontaux de deux brides 35 solidaires du bras 61.

La figure 4 montre aussi les deux vis V1, V2 par lesquelles la charnière droite doit être fixée sur le capot C1. Selon le mode de réalisation représenté, la tête de vissage 4 est conçue pour n'agir que sur une seule vis, comme expliqué ci-après. Toutefois, il est également concevable, sans sortir du principe de la présente invention, que la tête de vissage 4 soit conçue pour agir sur les deux vis en même temps.

Le vissage d'un objet par au moins une vis disposée à un endroit difficilement accessible est effectué selon la présente invention, et décrit à l'aide de l'exemple choisi du montage d'un capot moteur d'un véhicule, de la manière suivante.

Lorsqu'un capot doit être monté sur la caisse C2 d'un véhicule automobile, les opérateurs, un de chaque côté du véhicule, ouvrent d'abord les charnons mobiles respectivement de la charnière droite C4 et la charnière gauche. Ensuite, ils mettent en place le bâti G sur le bloc avant de la caisse C2. Puis, ils chargent une vis V1, avec la tête de vis en bas, dans la douille 5 du mécanisme de vissage D et referment les charnons mobiles.

Ensuite, les opérateurs mettent en place le capot C1 sur le bâti G. Ils saisissent chacun une visseuse et l'engagent sur le moyen d'entraînement 1 du mécanisme de vissage D pour fixer le capot C1 sur la caisse C2 ou, plus précisément, pour fixer l'extrémité inférieure de la charnière correspondante sur le support S.

Le capot C1 étant ainsi conformé et fixé, les opérateurs soulèvent celui-ci par pivotement autour des charnières d'articulation afin de pouvoir atteindre la vis V1 directement et finissent l'opération de vissage, c'est-à-dire visser une seconde vis V2 de chaque côté et revisser au couple la vis V1, avec la visseuse préalablement retirée du moyen d'entraînement 1. Enfin, les opérateurs retirent le bâti G.

C'est donc avec une même visseuse que l'on obtient, selon l'invention, la fixation pour conformation et la fixation définitive du capot C1 sur une caisse C2 d'un véhicule automobile, tout en gardant le capot C1 sur la caisse C2 en position fermée jusqu'à fixation provisoire du capot.

La présente invention apporte les avantages suivants :
- le montage d'une pièce, par exemple un capot moteur, sur un support, par exemple la caisse d'un véhicule automobile, peut être fait avec des visseuses classiques, à partir de l'extérieur du support tout en assurant un positionnement précis de la pièce par rapport au support, et cela de façon ergonomique et avec précision ;
- l'invention permet un montage de capot avec le capot fermé, malgré l'absence d'une accessibilité directe des vis des charnières, ce qui est reconnu plus efficace en termes de résultats géométrique ;
- l'invention évite l'utilisation de visseuses embarquées sur le bâti et évite ainsi l'inconvénient d'alourdir les moyens à mettre en oeuvre, voire de multiplier le nombre de visseuses ;
- l'invention évite de dégrader l'ergonomie et d'augmenter le coût de l'assemblage.

## Revendications

1. Procédé de fixation d'une pièce (C1) sur un support (C2) par des vis (V1, V2) difficilement accessibles,
**caractérisé en ce qu'**il comprend au moins les étapes suivantes :
placer un bâti (G), pourvu d'au moins un mécanisme de vissage à partie déportée (D) et conformé pour pouvoir servir comme gabarit pour la pièce (C1), sur le support (C2),
positionner la pièce (C1) sur le bâti (G) en une position de référence à laquelle les vis de fixation (V1, V2) sont difficilement accessibles et la partie déportée du mécanisme de vissage est à l'extérieur de la pièce,
commander à partir de sa partie déportée le mécanisme de vissage (D) pourvu d'au moins une vis de fixation (V1) de façon à visser la vis de fixation pour qu'elle assure au moins un pré-maintien de la pièce au support (C2).

2. Procédé selon la revendication 1, **caractérisé en ce que** la pièce (C1) est déplaçable de sa position de référence à une position relative au support (C2) à laquelle chaque vis (V1) est directement accessible et peut être serrée par une visseuse à un couple de serrage prédéterminé pour fixer définitivement la pièce (C1) au support (C2).

3. Procédé selon la revendication 2, **caractérisé en ce qu'**il consiste à utiliser d'autres vis de fixation (V2) pouvant être vissées par la visseuse à un couple de serrage prédéterminé pour fixer la pièce (C1) au support (C2) .

4. Procédé selon l'une quelconque des revendications 1 à 3, **caractérisé en ce qu'**il consiste à fixer la pièce (C1) au support (C2) par l'intermédiaire d'au moins un élément d'articulation, tel qu'une charnière, solidaire de la pièce, et chaque vis de fixation permettant de fixer l'élément d'articulation au support (C2).

5. Procédé selon l'une quelconque des revendications 1 à 4, **caractérisé en ce que** la pièce (C1) est un capot et le support (C2) est un charnon mobile (CM) d'une charnière (C4), un charnon fixe (CF) de la charnière (C4) étant déjà fixé à la caisse d'un véhicule, notamment automobile.

6. Dispositif pour fixer une pièce (C1) sur un support (C2) par des vis (V1, V2) difficilement accessibles, le dispositif comprenant un bâti (G) conformé pour pouvoir servir comme gabarit pour positionner la pièce (C1) par rapport au support (C2), lequel bâti (G) est pourvu d'au moins un mécanisme de vissage à partie déportée (D) relative au bâti.

7. Dispositif selon la revendication 6, **caractérisé en ce que** le bâti (G) comprend des premiers moyens de positionnement permettant de positionner le bâti (G) par rapport au support (C2) et des seconds moyens de positionnement permettant de positionner la pièce (C1) par rapport au bâti (G) ainsi que deux mécanismes de vissage avec déport (D1, D2) pour fixer des éléments de fixation droits et gauches de type charnière (S) sur la pièce (C1).

8. Dispositif selon la revendication 6 ou 7, **caractérisé en ce que** les premiers moyens de positionnement comprennent des premiers éléments proéminents conformés pour pouvoir coopérer avec des trous pilote formés dans une partie du support (C2), **en ce que** les seconds moyens de positionnement comprennent des seconds éléments proéminents conformés pour pouvoir coopérer avec des trous pilotes formés sur la pièce (C1) et **en ce que** les premiers et les seconds moyens de positionnement comprennent des appuis permettant de positionner en élévation le bâti (G) par rapport au support (C2) et la pièce (C1) par rapport au bâti(G).

9. Dispositif selon l'une quelconque des revendications 6 à 8, **caractérisé en ce que** le ou chacun des mécanismes de vissage à partie déportée (D) comporte un mécanisme de bascule (6) permettant au cours d'un vissage d'exercer à distance un effort axial sur les vis (V1) lors du vissage.

10. Dispositif selon l'une quelconque des revendications 6 à 9, **caractérisé en ce que** le ou chacun des mécanismes de vissage à partie déportée (D) comporte un embout (11) dont une extrémité comporte une tête (11A) identique à la tête de chaque vis (V1, V2) utilisée pour la fixation de la pièce (C1), pour être accouplée à une visseuse.

11. Dispositif selon l'une quelconque des revendications 6 à 10, **caractérisé en ce que** le ou chacun des mécanismes de vissage à partie déportée (D) comporte un axe flexible (2) reliant une tête de vissage (4) avec renvoi d'angle de type « crowfoot » à un moyen d'entraînement de type boîte à renvoi d'angle (1) destiné à recevoir une visseuse.

12. Dispositif selon l'une quelconque des revendications 6 à 11, **caractérisé en ce que** la pièce (C1) est un capot et le support (C2) est un charnon mobile (CM) d'une charnière (C4), un charnon fixe (CF) de la charnière (C4) étant déjà fixé à la caisse d'un véhicule, notamment automobile.
